# FASCICULE DE BREVET EUROPEEN

(11) **EP 2 890 577 B1**
(45) Date de publication et mention de la délivrance du brevet: **30.08.2017**
(21) Numéro de dépôt: 13756635.2
(22) Date de dépôt: 31.07.2013
(51) Int. Cl.: B60K 1/04

(54) **AGENCEMENT MUNI D'UN MÉCANISME DE RETENUE D'UN DISPOSITIF DE STOCKAGE D'ÉNERGIE, ET VÉHICULE ASSOCIÉ**
ANORDNUNG MIT EINEM HALTEMECHNISMUS EINES ENERGIESPEICHERSYSTEMS UND ENTSPRECHENDES FAHRZEUG
ASSEMBLY WITH A RETAINING MECHANISM OF AN ENERGY STORAGE DEVICE AND ASSOCIATED VEHICLE

(30) Priorité: 30.08.2012 FR 1258101
(43) Date de publication de la demande: 08.07.2015
(73) Titulaire: Renault S.A.S., 92100 Boulogne-Billancourt (FR)
(72) Inventeur: TRENTIN, Stephane, F-91170 Viry-Chatillon (FR); MULATO, Gilles, F-92320 Chatillon (FR)
(86) Numéro de dépôt international: PCT/FR2013/051850
(87) Numéro de publication internationale: WO 2014/033384

(56) Documents cités:
- WO-A1-2012/035987
- DE-A1-102010 006 514

## Description

### Domaine technique de l'invention

L'invention concerne le domaine des véhicules automobiles.

L'invention a pour objet plus particulièrement un agencement pour véhicule automobile comportant un châssis, un dispositif de stockage d'énergie électrique, un dispositif de fixation du dispositif de stockage d'énergie au châssis du véhicule.

### État de la technique

Le développement de véhicules à propulsion entièrement électrique, ou hybride thermique-électrique, est en plein essor notamment grâce à la conception de nouvelles technologies de batteries assez performantes pour assurer la mise en mouvement du véhicule.

Lors d'une utilisation d'une batterie de propulsion, il est préférable que celle-ci soit facilement échangeable et accessible à partir de l'extérieur du véhicule. Pour cela la batterie de propulsion est, de préférence, fixée au châssis sous le véhicule.

Comme tout véhicule automobile, le véhicule à propulsion entièrement électrique, ou hybride, est susceptible d'être accidenté lors d'un choc, par exemple avec un autre véhicule. Pour des raisons de sécurité, il est préférable que la batterie reste solidaire du véhicule. Pour cela, les véhicules présents actuellement sur le marché multiplient les points de fixation de la batterie au châssis afin de diminuer la probabilité de l'arrachement de tous les points de fixation.

Cependant, bien que la probabilité d'arrachement soit diminuée, en cas de choc sévère, notamment latéral, les fixations ont tendance à toutes rompre à cause de l'effort de cisaillement induit par le choc. Il en résulte une désolidarisation de la batterie du reste du véhicule.

Le document DE102010006514 qui montre un agencement selon le préambule de la revendication 1, décrit un dispositif qui présente notamment cet inconvénient.

### Objet de l'invention

Le but de la présente invention est de proposer une solution de sécurisation d'un dispositif de stockage d'énergie électrique de véhicule automobile.

On tend vers ce but notamment par un agencement selon la revendication 1.

Selon l'invention, le mécanisme de retenue comporte un organe de liaison monté sur le châssis, et un organe de retenue monté sur l'organe de liaison, ledit organe de liaison traversant une cavité, par exemple un trou débouchant, du dispositif de stockage d'énergie de sorte qu'au moins une partie du dispositif de stockage d'énergie soit disposée entre le châssis et l'organe de retenue.

Avantageusement, l'organe de retenue est une rondelle, notamment de dimensions empêchant son passage au travers de la cavité.

Par ailleurs, l'organe de liaison peut comporter une platine montée sur le châssis à partir de laquelle s'étend un corps allongé de l'organe de liaison, ledit corps allongé traversant la cavité du dispositif de stockage d'énergie.

Avantageusement, l'organe de retenue est monté sur le corps allongé à une extrémité opposée à la platine, notamment par un boulon vissé dans le corps allongé et mettant sous contrainte l'organe de retenue contre ledit corps allongé.

De préférence, le dispositif de stockage d'énergie comporte une batterie de propulsion du véhicule automobile.

L'agencement peut comporter au moins deux mécanismes de retenue.

Selon une mise en oeuvre particulière, la rupture d'au moins une partie du dispositif de fixation est réalisée lors d'un choc frontal, arrière, ou latéral, imposé au véhicule, notamment par cisaillement d'un organe de fixation du dispositif de fixation.

L'invention est aussi relative à un véhicule automobile comportant un agencement tel que décrit.

Dans le véhicule, l'agencement peut être configuré de sorte que le dispositif de stockage d'énergie est accessible par l'extérieur et le dessous du véhicule.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un exemple de réalisation de l'invention,
- la figure 2 est une vue selon une autre perspective de la figure 1,
- la figure 3 est une vue selon la coupe A-A de la figure 1,
- la figure 4 illustre une vue en perspective d'un dispositif de stockage d'énergie maintenu par deux mécanismes de retenue selon l'exemple de la figure 1.

### Description de modes préférentiels de l'invention

L'agencement décrit ci-après diffère de l'art antérieur notamment en ce qu'il comporte au moins un mécanisme de retenue supplémentaire configuré de sorte à retenir le dispositif de stockage d'énergie notamment en cas de chute de ce dernier en direction du sol.

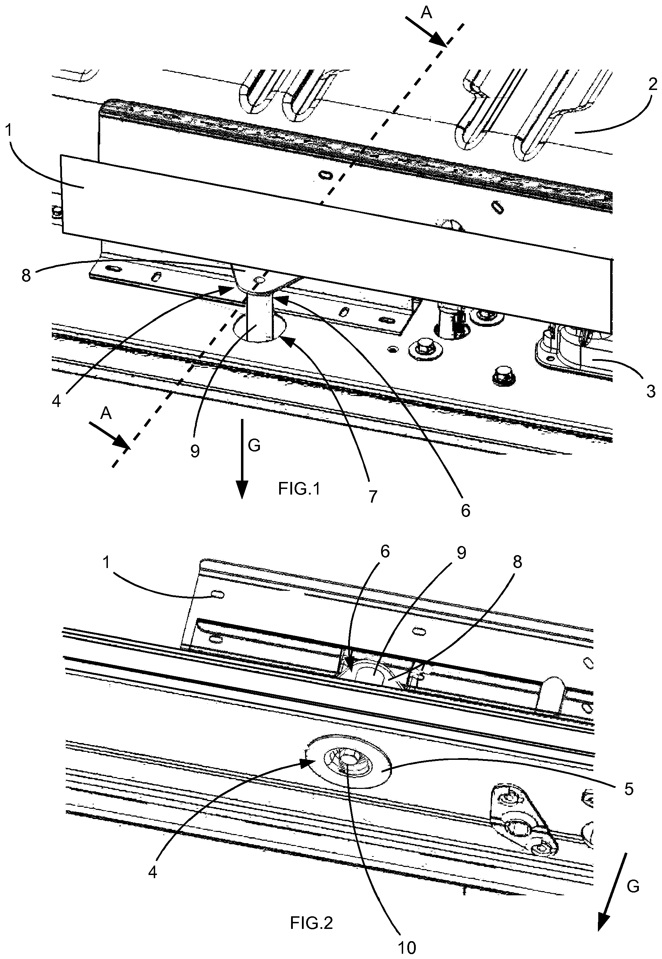

Sur les figures 1 à 3, l'agencement pour véhicule automobile comporte un châssis 1, un dispositif de stockage d'énergie électrique 2, un dispositif de fixation 3 du dispositif de stockage d'énergie 2 au châssis 1 du véhicule.

En outre, l'agencement comporte un mécanisme de retenue 4 configuré de sorte à passer, en cas de rupture d'au moins une partie du dispositif de fixation 3, d'une configuration passive dans laquelle il ne supporte pas le dispositif de stockage d'énergie 2 vers une configuration active dans laquelle il supporte le dispositif de stockage d'énergie 2 de sorte à le retenir à proximité du châssis 1. Autrement dit, le mécanisme de retenue 4 peut agir en secours du dispositif de fixation 3. Par « à proximité », on peut entendre, par exemple, que le dispositif de stockage d'énergie 2 peut être retenu par rapport au châssis 1 grâce au mécanisme de retenue 4 dans sa configuration active.

Le châssis 1 du véhicule est une structure rigide à laquelle tous les éléments constituants un véhicule sont montés. Par « monté sur ou au », on n'entend pas forcément un montage direct mettant en contact deux pièces montées l'une sur l'autre, le montage pouvant être réalisé en utilisant des pièces intermédiaires interposées entre les deux pièces à monter.

En fait, dans la configuration passive, le dispositif de stockage d'énergie 2 est fixe par rapport au châssis 1, et est retenu et supporté par le dispositif de fixation 3. Dans la configuration active, le mécanisme de retenue retient et supporte le dispositif de stockage 2.

Le passage de la configuration passive à la configuration active est avantageusement entraîné par un choc transmis à l'agencement, par exemple un choc imposé au niveau d'une surface extérieure du véhicule.

De préférence, le passage de la configuration passive à la configuration active est consécutif à une rupture au moins partielle du dispositif de fixation 3. La rupture peut aussi être totale c'est-à-dire que le dispositif de fixation 3 ne participe plus du tout au support et au maintien du dispositif de stockage d'énergie 2 au châssis 1. Autrement dit, en cas de rupture totale, seul le mécanisme de retenue 4 permet de maintenir et de supporter le dispositif de stockage d'énergie 2 par rapport au châssis 1.

De préférence, le passage de la configuration passive vers la configuration active s'effectue par un mouvement de chute du dispositif de stockage d'énergie 2. Sur les figures 1 à 3 la direction de la chute est parallèle à la gravité terrestre illustrée par la flèche G.

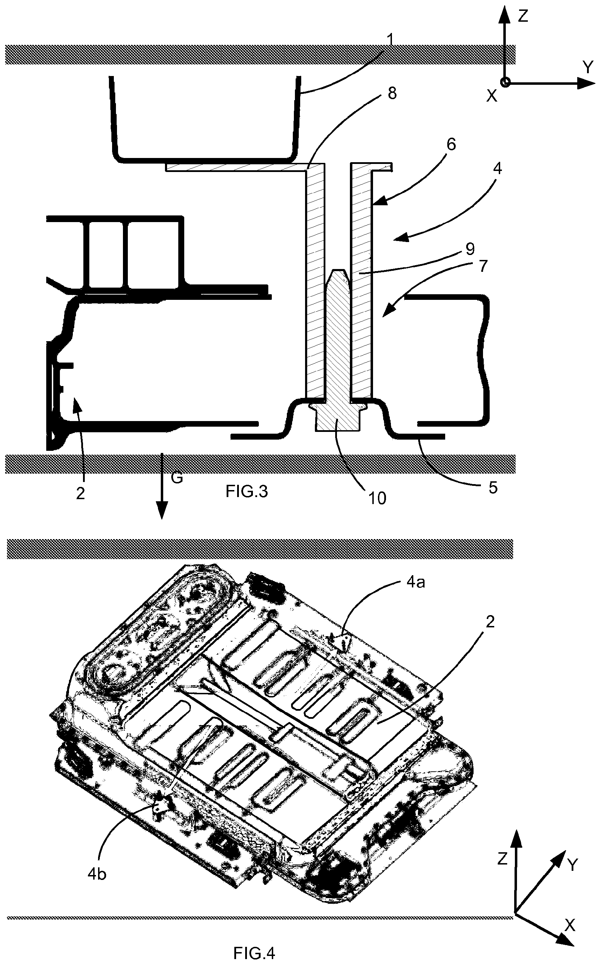

En cas de chute du dispositif de stockage d'énergie 2, cette dernière n'est pas longue car la course de la chute orientée dans la même direction et parallèlement à G peut être stoppée lors de la mise en contact d'une butée, aussi appelée organe de retenue 5 (figures 2 et 3) du mécanisme de retenue, avec le dispositif de stockage d'énergie 2.

De manière générale, le mécanisme de retenue 4 peut comporter un organe de liaison 6 monté sur le châssis 1, et un organe de retenue 5 monté sur l'organe de liaison 6, ledit organe de liaison 6 traversant une cavité 7, par exemple un trou débouchant, du dispositif de stockage d'énergie 2 de sorte qu'au moins une partie du dispositif de stockage d'énergie 2 soit disposée entre le châssis 1 et l'organe de retenue 5. Selon une mise en oeuvre particulière, l'organe de retenue 5 est une rondelle, notamment de dimensions empêchant son passage au travers de la cavité 7. Ceci permet de conserver le maintien du dispositif de stockage d'énergie 2 quelle que soit la position de la rondelle par rapport à la cavité 7. Un élément autre qu'une rondelle pourrait être utilisé du moment qu'il assure la fonction de butée et de récupération du dispositif de stockage d'énergie 2 avant que ce dernier ne touche le sol.

Avantageusement, l'organe de liaison 6 comporte une platine 8 montée sur le châssis 1 (de préférence par contact direct avec le châssis 1) à partir de laquelle s'étend un corps allongé 9 de l'organe de liaison 4, ledit corps allongé 9 traversant la cavité 7 du dispositif de stockage d'énergie 2. De préférence, l'organe de liaison 6 et la platine 8 sont monobloc et l'organe de retenue 5 est amovible.

Avantageusement, l'organe de retenue 5 est monté sur le corps allongé 9 à une extrémité du corps allongé 9 opposée à la platine 8, notamment par un boulon 10 vissé dans le corps allongé 9 et mettant sous contrainte l'organe de retenue 5 contre ledit corps allongé 9. On comprend ici que le boulon n'est qu'un exemple de réalisation, il peut être remplacé par tout élément permettant de fixer l'organe de retenue 5 au corps allongé 9.

Sur l'exemple particulier de la figure 3, l'allongement du corps allongé 9 est sensiblement parallèle à la direction G.

Avantageusement, le dispositif de stockage d'énergie 2 comporte une batterie de propulsion du véhicule automobile, et de préférence un support de batterie sur lequel est montée la batterie. Le support peut être percé de sorte à délimiter la cavité 7 et être traversé par l'organe de liaison 6, en particulier par le corps allongé 9 de l'organe de liaison.

Le terme « propulsion » est à prendre au sens large dans sa définition permettant d'engendrer un déplacement du véhicule. Ainsi, la batterie de propulsion peut fournir du courant à un moteur électrique configuré pour entraîner le véhicule par traction arrière et/ou avant.

De préférence comme illustré à la figure 4, l'agencement comporte au moins deux mécanismes de retenue 4a, 4b. Ces deux mécanismes de retenue 4a, 4b sont, de préférence, montés au niveau de deux côtés opposés du dispositif de stockage d'énergie. Autrement dit, le dispositif peut comporter au moins deux organes de liaison chacun traversant le dispositif de stockage d'énergie 2 et chacun associé à un organe de retenue correspondant. Bien entendu, en fonction de la forme, du poids ou d'autres caractéristiques du dispositif de stockage d'énergie, le nombre de mécanismes de retenue sera adapté.

Avantageusement, la rupture d'au moins une partie du dispositif de fixation 3 est réalisée lors d'un choc frontal, arrière, ou latéral, imposé au véhicule, notamment par cisaillement d'un (ou plusieurs) organe de fixation du dispositif de fixation 3.

En fait, de manière générale, il faut comprendre que le dispositif de fixation 3 comporte une pluralité d'organes de fixation au châssis 1. En cas d'un choc important, un ou plusieurs de ces organes, voire tous, peuvent céder à cause d'un effort de cisaillement, transmis par le choc, entre le châssis 1 et le dispositif de stockage d'énergie 2. Le mécanisme de retenue agit donc en secours pour supporter et retenir le dispositif de stockage d'énergie 2 après sa chute selon G.

De préférence, dans la configuration passive, le mécanisme de retenue 4 n'est pas contact physique direct avec le dispositif de stockage d'énergie 2. Dès lors, en cas de choc, cela n'entraînera pas de rupture de la liaison du mécanisme de retenue 4 avec le châssis 1. En effet on considère que l'énergie du choc aura été dissipée suffisamment, lorsque le mécanisme de retenue viendra en contact physique avec le dispositif de stockage d'énergie, ceci évitant tout risque de rupture du mécanisme de retenue 4.

Un véhicule automobile peut comporter un agencement tel que décrit précédemment.

L'agencement est, de préférence, disposé dans le véhicule selon un référentiel X, Y, Z du véhicule tel qu'orienté aux figures 3 et 4, où l'axe X représente l'axe longitudinal du véhicule passant par l'avant et l'arrière du véhicule, l'axe Z un axe vertical du véhicule et orienté vers le ciel lorsque les roues du véhicules reposent sur le sol, et l'axe Y est l'axe transversal du véhicule sensiblement perpendiculaire à X et à Z tout en étant sensiblement horizontal. Un choc latéral est alors sensiblement parallèle à l'axe Y alors qu'un choc frontal ou arrière est sensiblement parallèle à l'axe X.

De préférence, le dispositif de stockage d'énergie 2 est disposé de sorte à être accessible par l'extérieur et le dessous du véhicule. Le dessous du véhicule est défini par une face du véhicule faisant face au sol lorsque le véhicule repose sur le sol par ses roues.

Dans l'exemple particulier avec l'organe de retenue 5, il est possible d'échanger le dispositif de stockage d'énergie en retirant chaque organe de retenue 5. Ceci permet, par exemple, en station de changer le dispositif de stockage d'énergie 2.

## Revendications

1. Agencement pour véhicule automobile comportant un châssis (1), un dispositif de stockage d'énergie électrique (2), un dispositif de fixation (3) du dispositif de stockage d'énergie (2) au châssis (1) du véhicule, l'agencement comportant un mécanisme de retenue (4) configuré de sorte à passer, en cas de rupture d'au moins une partie du dispositif de fixation (3), d'une configuration passive dans laquelle il ne supporte pas le dispositif de stockage d'énergie (2) vers une configuration active dans laquelle il supporte le dispositif de stockage d'énergie (2) de sorte à le retenir à proximité du châssis (1), le passage de la configuration passive vers la configuration active s'effectue par un mouvement de chute du dispositif de stockage d'énergie (2), **caractérisé en ce que** le mécanisme de retenue (4) comporte un organe de liaison (6) monté sur le châssis (1), et un organe de retenue (5) monté sur l'organe de liaison (6), ledit organe de liaison (6) traversant une cavité (7), par exemple un trou débouchant, du dispositif de stockage d'énergie (2) de sorte qu'au moins une partie du dispositif de stockage d'énergie (2) soit disposée entre le châssis (1) et l'organe de retenue (5).

2. Agencement selon la revendication 1, **caractérisé en ce que** l'organe de retenue (5) est une rondelle, notamment de dimensions empêchant son passage au travers de la cavité (7).

3. Agencement selon l'une des revendications 1 ou 2, **caractérisé en ce que** l'organe de liaison (6) comporte une platine (8) montée sur le châssis (1) à partir de laquelle s'étend un corps allongé (9) de l'organe de liaison (4), ledit corps allongé (9) traversant la cavité (7) du dispositif de stockage d'énergie (2).

4. Agencement selon la revendication 3, **caractérisé en ce que** l'organe de retenue (5) est monté sur le corps allongé (9) à une extrémité opposée à la platine (8), notamment par un boulon (10) vissé dans le corps allongé (9) et mettant sous contrainte l'organe de retenue (5) contre ledit corps allongé (9).

5. Agencement selon l'une quelconque des revendications précédentes, **caractérisé en ce que** le dispositif de stockage d'énergie (2) comporte une batterie de propulsion du véhicule automobile.

6. Agencement selon l'une quelconque des revendications précédentes, **caractérisé en ce qu'**il comporte au moins deux mécanismes de retenue (4).

7. Agencement selon l'une quelconque des revendications précédentes, **caractérisé en ce que** la rupture d'au moins une partie du dispositif de fixation (3) est réalisée lors d'un choc frontal, arrière, ou latéral, imposé au véhicule, notamment par cisaillement d'un organe de fixation du dispositif de fixation (3).

8. Véhicule automobile, **caractérisé en ce qu'**il comporte un agencement selon l'une quelconque des revendications précédentes.

9. Véhicule selon la revendication 8, **caractérisé en ce que** l'agencement est configuré de sorte que le dispositif de stockage d'énergie (2) est accessible par l'extérieur et le dessous du véhicule.

## Patentansprüche

1. Anordnung für ein Kraftfahrzeug, umfassend ein Gestell (1), eine Vorrichtung zum Speichern elektrischer Energie (2), eine Vorrichtung zum Befestigen (3) der Energiespeichervorrichtung (2) an dem Gestell (1) des Fahrzeugs,
wobei die Anordnung Folgendes umfasst:
einen Haltemechanismus (4) der derart ausgelegt ist, um, im Falle eines Bruchs mindestens eines Teils der Vorrichtung zum Befestigen (3), eine passive Konfiguration, bei der er die Energiespeichervorrichtung (2) nicht trägt, auf eine aktive Konfiguration umzustellen, bei der er die Energiespeichervorrichtung (2) trägt, um sie nahe des Gestells (1) zu halten, wobei die Umstellung der passiven Konfiguration auf die aktive Konfiguration durch eine Fallbewegung der Energiespeichervorrichtung (2) erfolgt, **dadurch gekennzeichnet, dass**
der Haltemechanismus (4) ein Verbindungsglied (6), das auf dem Gestell (1) befestigt ist, und ein Halteglied (5), das auf dem Verbindungsglied (6) befestigt ist, umfasst, wobei das Verbindungsglied (6) einen Hohlraum (7), beispielsweise ein Durchgangsloch, der Energiespeichervorrichtung (2) durchquert, so dass mindestens ein Teil der Energiespeichervorrichtung (2) zwischen dem Gestell (1) und dem Halteglied (5) angeordnet ist.

2. Anordnung nach Anspruch 1, **dadurch gekennzeichnet, dass** das Halteglied (5) eine Scheibe ist, insbesondere mit Abmessungen, die dessen Durchkommen durch den Hohlraum (7) verhindern.

3. Anordnung nach einem der Ansprüche 1 oder 2, **dadurch gekennzeichnet, dass** das Verbindungsglied (6) eine Platte (8) umfasst, die an dem Gestell (1) angebracht ist, von welcher aus sich ein länglicher Körper (9) des Verbindungsglieds (4) erstreckt, wobei der längliche Körper (9) den Hohlraum (7) der Energiespeichervorrichtung (2) durchquert.

4. Anordnung nach Anspruch 3, **dadurch gekennzeichnet, dass** das Halteglied (5) auf dem länglichen Körper (9) an einem Ende angebracht ist, das der Platte (8) entgegengesetzt ist, insbesondere durch einen Bolzen (10), der in den länglichen Körper (9) geschraubt ist und das Halteglied (5) gegen den länglichen Körper (9) spannt.

5. Anordnung nach einem der vorhergehenden Ansprüche, **dadurch gekennzeichnet, dass** die Energiespeichervorrichtung (2) eine Antriebsbatterie des Kraftfahrzeugs umfasst.

6. Anordnung nach einem der vorhergehenden Ansprüche, **dadurch gekennzeichnet, dass** sie mindestens zwei Haltemechanismen (4) umfasst.

7. Anordnung nach einem der vorhergehenden Ansprüche, **dadurch gekennzeichnet, dass** der Bruch mindestens eines Teils der Vorrichtung zum Befestigen (3) bei einem Frontal-, Heck- oder Seitenaufprall ausgeführt wird, der auf das Fahrzeug ausgeübt wird, insbesondere durch Scherung eines Befestigungselements der Vorrichtung zum Befestigen (3) .

8. Kraftfahrzeug, **dadurch gekennzeichnet, dass** es eine Anordnung nach einem der vorhergehenden Ansprüche umfasst.

9. Fahrzeug nach Anspruch 8, **dadurch gekennzeichnet, dass** die Anordnung derart ausgelegt ist, dass die Energiespeichervorrichtung (2) von außerhalb und unterhalb des Fahrzeugs zugänglich ist.

## Claims

1. Arrangement for a motor vehicle comprising a chassis (1), an electrical energy storage device (2), and a device (3) for fixing the energy storage device (2) to the chassis (1) of the vehicle, the arrangement comprising a holding mechanism (4) configured so as to transfer, in the case of breakage of at least part of the fixing device (3), from a passive configuration in which it does not support the energy storage device (2), to an active configuration in which it supports the energy storage device (2) so as to hold it close to the chassis (1), the transfer from the passive configuration to the active configuration taking place on a falling movement of the energy storage device (2), **characterized in that** the holding mechanism (4) comprises a connecting element (6) mounted on the chassis (1), and a holding element (5) mounted on the connecting element (6), said connecting element (6) passing through a cavity (7), for example a through hole, of the energy storage device (2) such that at least part of the energy storage device (2) is arranged between the chassis (1) and the holding element (5).

2. Arrangement according to Claim 1, **characterized in that** the holding element (5) is a washer, in particular of dimensions preventing its passage through the cavity (7) .

3. Arrangement according to either of Claims 1 and 2, **characterized in that** the connecting element (6) comprises a plate (8) which is mounted on the chassis (1) and from which an elongated body (9) of the connecting element (4) extends, said elongated body (9) passing through the cavity (7) of the energy storage device (2).

4. Arrangement according to Claim 3, **characterized in that** the holding element (5) is mounted on the elongated body (9) at an end opposite the plate (8), in particular by a bolt (10) screwed into the elongated body (9) and forcing the holding element (5) against said elongated body (9).

5. Arrangement according to any of the preceding claims, **characterized in that** the energy storage device (2) comprises a propulsion battery for the motor vehicle.

6. Arrangement according to any of the preceding claims, **characterized in that** it comprises at least two holding mechanisms (4).

7. Arrangement according to any of the preceding claims, **characterized in that** the breakage of at least part of the fixing device (3) occurs during a frontal, rear or lateral impact imposed on the vehicle, in particular by shearing of a fixing element of the fixing device (3).

8. Motor vehicle, **characterized in that** it comprises an arrangement according to any of the preceding claims.

9. Vehicle according to Claim 8, **characterized in that** the arrangement is configured such that the energy storage device (2) is accessible from the outside and the underside of the vehicle.
